# EUROPEAN PATENT APPLICATION

(11) **EP 4 391 634 A1**
(43) Date of publication of application: **26.06.2024**
(21) Application number: 22857696.3
(22) Date of filing: 12.08.2022
(51) Int. Cl.: H04W 24/10

(54) **INFORMATION PROCESSING METHOD AND DEVICE, AND TERMINAL**

(30) Priority: 16.08.2021 CN 202110939102
(71) Applicant: Vivo Mobile Communication Co., Ltd., Dongguan, Guangdong 523863 (CN)
(72) Inventor: SUN, Peng, Dongguan, Guangdong 523863 (CN); PAN, Xiang, Dongguan, Guangdong 523863 (CN); TAMRAKAR, Rakesh, Dongguan, Guangdong 523863 (CN)
(74) Representative: Lavoix
(86) International application number: PCT/CN2022/112115
(87) International publication number: WO 2023/020384

(57) **Abstract**

The present application discloses an information processing method and apparatus, and a terminal, and belongs to the field of communication technologies. The method in embodiments of the present application includes: performing, by a terminal, a first operation in a case that a first condition is met, where the first condition includes at least one of the following: a location in which the terminal is located meets a first preset condition; a first measurement quantity meets a second preset condition; a first event meets a third preset condition; a first identifier meets a fourth preset condition; a first transmission parameter meets a fifth preset condition; application layer configuration information meets a sixth preset condition; a first configuration meets a seventh preset condition. The first operation includes one of the following: performing statistics to obtain first information; generating a first report; reporting second information; or compressing second information in a preset compression manner, and reporting compressed second information.

## Description

### CROSS-REFERENCE TO RELATED APPLICATIONS

This application claims priority to Chinese Patent Application No. 202110939102.X, filed in China on August 16, 2021, which is incorporated herein by reference in its entirety.

### TECHNICAL FIELD

The present application relates to the field of communication technologies, and in particular, to an information processing method and apparatus, and a terminal.

### BACKGROUND

Replacing modules in a system in a related technology with artificial intelligence (Artificial Intelligence, AI) or machine learning (Machine Learning, ML) methods can effectively improve system performance. When AI or ML is applied to a wireless communication system, a large amount of data needs to be collected for training. Directly collecting corresponding training data requires a large quantity of air interface overheads.

### SUMMARY

Embodiments of the present application provide an information processing method and apparatus, and a terminal. This can resolve a problem in a related technology that directly collecting corresponding training data requires a large quantity of air interface overheads.

According to a first aspect, an information processing method is provided, including:
performing, by a terminal, a first operation in a case that a first condition is met, where
the first condition includes at least one of the following:
   a location in which the terminal is located meets a first preset condition;
   a first measurement quantity meets a second preset condition;
   a first event meets a third preset condition;
   a first identifier meets a fourth preset condition;
   a first transmission parameter meets a fifth preset condition;
   application layer configuration information meets a sixth preset condition; or
   a first configuration meets a seventh preset condition.

The first operation includes one or more of the following:
collecting statistics to obtain first information;
generating a first report;
reporting second information; and
compressing the second information in a preset compression manner, and reporting compressed second information.

According to a second aspect, an information processing apparatus is provided, including:
a first processing module, configured to perform a first operation in a case that a first condition is met, where
the first condition includes at least one of the following:
   a location in which the terminal is located meets a first preset condition;
   a first measurement quantity meets a second preset condition;
   a first event meets a third preset condition;
   a first identifier meets a fourth preset condition;
   a first transmission parameter meets a fifth preset condition;
   application layer configuration information meets a sixth preset condition; or
   a first configuration meets a seventh preset condition.

The first operation includes one or more of the following:
collecting statistics to obtain first information;
generating a first report;
reporting second information; and
compressing the second information in a preset compression manner, and reporting compressed second information.

According to a third aspect, a terminal is provided, where the terminal includes a processor, a memory, and a program or instructions stored in the memory and executable on the processor, and when the program or instructions are executed by the processor, steps of the method according to the first aspect are implemented.

According to a fourth aspect, a terminal is provided, including a processor and a communication interface. The processor is configured to perform a first operation in a case that a first condition is met, where
the first condition includes at least one of the following:
a location in which the terminal is located meets a first preset condition;
a first measurement quantity meets a second preset condition;
a first event meets a third preset condition;
a first identifier meets a fourth preset condition;
a first transmission parameter meets a fifth preset condition;
application layer configuration information meets a sixth preset condition; or
a first configuration meets a seventh preset condition.

The first operation includes one or more of the following:
collecting statistics to obtain first information;
generating a first report;
reporting second information; and
compressing the second information in a preset compression manner, and reporting compressed second information.

According to a fifth aspect, a readable storage medium is provided. The readable storage medium stores a program or instructions, and the program or the instructions are executed by a processor to implement steps of the method in the first aspect.

According to a sixth aspect, a chip is provided, where the chip includes a processor and a communication interface. The communication interface is coupled to the processor, and the processor is configured to run a program or instructions to perform the method according to the first aspect.

According to a seventh aspect, a computer program/program product is provided. The computer program/program product is stored in a non-transitory storage medium, and the program/program product is executed by at least one processor to implement steps of the method according to the first aspect.

In embodiments of the present application, the following is performed only in a case that a first condition is met: collecting statistics to obtain first information; generating a first report; reporting second information; and/or compressing second information in a preset compression manner, and reporting compressed second information, so that air interface overheads can be reduced to some extent.

### BRIEF DESCRIPTION OF DRAWINGS

FIG 1 is a diagram of a structure of a communication system to which embodiments of the present application can be applied;
FIG 2 is a schematic flowchart of an information processing method according to an embodiment of the present application;
FIG 3 is a schematic diagram of modules of an information processing apparatus according to an embodiment of the present application;
FIG 4 is a block diagram of a structure of a communication device according to an embodiment of the present application; and
FIG 5 is a block diagram of a structure of a terminal according to an embodiment of the present application.

### DESCRIPTION OF EMBODIMENTS

The following clearly describes technical solutions in embodiments of the present application with reference to the accompanying drawings in embodiments of the present application. Apparently, the described embodiments are some but not all of embodiments of the present application. All other embodiments obtained by a person of ordinary skill in the art based on embodiments of the present application shall fall within the protection scope of the present application.

The terms "first", "second", and the like in this specification and claims of the present application are used to distinguish between similar objects instead of describing a specific order or sequence. It should be understood that, the terms used in such a way is interchangeable in proper circumstances, so that embodiments of the present application can be implemented in an order other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It should be noted that, the technologies described in embodiments of the present application are not limited to a long term evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in embodiments of the present application may be used interchangeably. The technologies described can be applied to both the systems and the radio technologies mentioned above as well as to other systems and radio technologies. The following describes a new radio (New Radio, NR) system for example purposes, and term "NR" is used in most of the following description. These technologies may also be applied to applications other than NR system applications, for example, applied to a 6^{th} generation (6^{th} Generation, 6G) communication system.

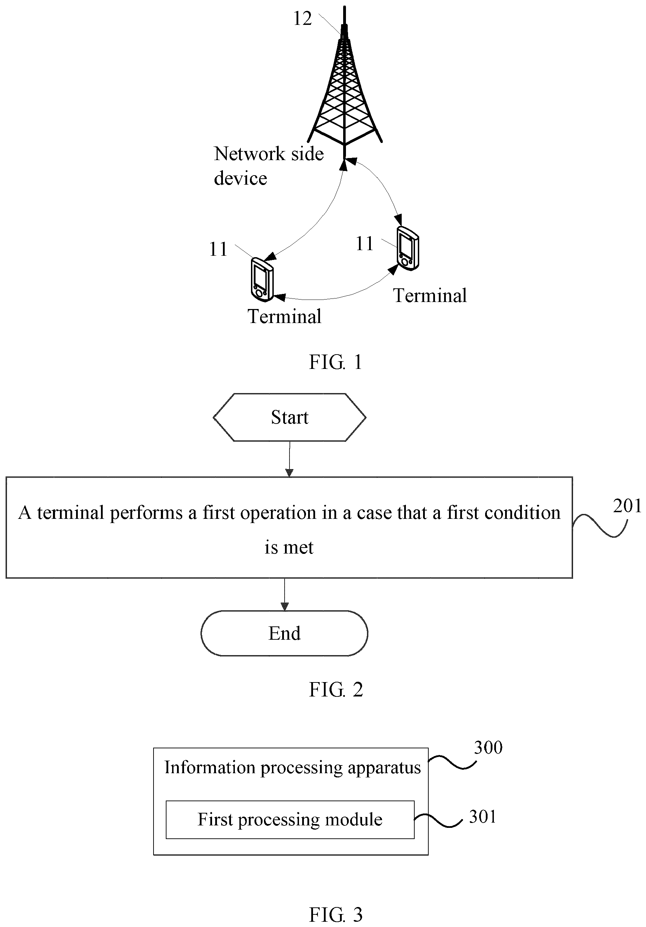

FIG 1 is a diagram of a structure of a wireless communication system to which embodiments of the present application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (Ultra-Mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), vehicular user equipment (Vehicle User Equipment, VUE), pedestrian user equipment (Pedestrian User Equipment, PUE), a smart home (a home device with wireless communication, such as a refrigerator, a television, a washing machine, or furniture). The wearable device includes: a smart watch, a smart band, a smart headset, smart glasses, smart jewelry (for example, a smart bracelet, a smart wristlet, a smart ring, a smart necklace, a smart anklet, or a smart ankle chain), a smart wristband, smart clothing, a game console, and the like. It should be noted that a specific type of the terminal 11 is not limited in embodiments of the present application. The network side device 12 may be a base station or a core network. The base station may be referred to as a nodeB, an evolved nodeB, an access point, a base transceiver station (Base Transceiver Station, BTS), a radio base station, a radio transceiver, a basic service set (Basic Service Set, BSS), an extended service set (Extended Service Set, ESS), a node B, an evolved node B (Evolved Node B, eNB), a home node B, a home evolved node B, a wireless local area network (Wireless Local Area Network, WLAN) access point, a wireless fidelity (Wireless Fidelity, WiFi) node, a transmission reception point (Transmitting Receiving Point, TRP), or another appropriate term in the art. The base station is not limited to a specified technical term, provided that the same technical effect is achieved. It should be noted that, in embodiments of the present application, a base station in an NR system is merely used as an example, but a specific type of the base station is not limited.

The following describes in detail the information processing method provided in embodiments of the present application through some embodiments and application scenarios thereof with reference to the accompanying drawings.

As shown in FIG 2, an embodiment of the present application provides an information processing method, including:
Step 201: A terminal performs a first operation in a case that a first condition is met.

The first condition includes at least one of the following:
a first location condition, such as a location in which the terminal is located, meets a first preset condition;
a first measurement quantity condition, such as a first measurement quantity, meets a second preset condition;
a first event condition, such as a first event, meets a third preset condition;
a first identifier condition, such as a first identifier, meets a fourth preset condition;
a first transmission parameter condition, such as a first transmission parameter, meets a fifth preset condition;
an application layer related condition, such as application layer configuration information, meets a sixth preset condition; or
a first configuration condition, such as a first configuration, meets a seventh preset condition.

The first operation includes one or more of the following:
collecting statistics to obtain first information;
generating a first report;
reporting second information; and
compressing the second information in a preset compression manner, and reporting compressed second information.

Herein, the first information is information related to data used for training, the first report is a report related to the data used for training, and the second information is information related to the data used for training.

The collecting statistics to obtain first information may be: collecting statistics on the data used for training to obtain the first information. Optionally, when a quantity of pieces of first information reaches a preset threshold, the first information is reported.

The generating a first report may be: generating the first report based on the data used for training.

The first information, the first report, or the second information may include one or more of the following:
target information;
representation information of target information;
measurement information corresponding to target information;
neural network usage information corresponding to target information;
whether target information meets the first condition; or
value information corresponding to target information, where the target information includes at least one of the following:
   information about the location in which the terminal is located;
   information about the first measurement quantity;
   information about the first event;
   information about the first identifier;
   information about the first transmission parameter;
   the application layer configuration information; or
   first configuration information, where the first configuration information includes one or more of the following:
      specific second information configured for reporting; and
      content for configuring the second information.

It should be noted that the first condition varies with an application scenario, for example, a first condition in a positioning training scenario is different from a first condition in a channel state information training scenario.

In addition, in this embodiment of the present application, the terminal may interact with (one or more) preset nodes to obtain the first condition. The preset node includes, but is not limited to: a base station, a location management function (Location Management Function, LMF), a network data analytics function (Network Data Analytics Function, NWDAF), an operations, administration, and maintenance (Operation Administration and Maintenance, OAM) node, or another core network node.

According to the information processing method in this embodiment of the present application, the following is performed only in a case that a first condition is met: collecting statistics to obtain first information; generating a first report; reporting second information; and/or compressing second information in a preset compression manner, and reporting compressed second information, so that air interface overheads can be reduced to some extent.

In a first optional implementation, the first location condition includes:
the location in which the terminal is located meets the first preset condition.

The location in which the terminal is located includes at least one of the following:
a cell in which the terminal is located;
a tracking area (Tracking Area, TA) in which the terminal is located;
a radio access network-based notification area (RAN-based Notification Area, RNA) in which the terminal is located;
a geographical location in which the terminal is located; or
a timing advance (Timing Advance, TA) indicated by a network to the terminal.

The first preset condition includes at least one of the following:
a specific representation of the terminal or the location of the terminal conforms to a preconfigured range corresponding to a cell identifier;
a specific representation of the terminal or the location of the terminal conforms to a preconfigured range corresponding to a tracking area;
a specific representation of the terminal or the location of the terminal conforms to a preconfigured range corresponding to a geographical location;
a specific representation of the terminal or the location of the terminal conforms to a preconfigured range corresponding to a radio access network-based notification area RNA; or
a specific representation of the terminal or the location of the terminal conforms to a preconfigured range corresponding to a timing advance TA.

In a second optional implementation, the first measurement quantity condition includes:
the first measurement quantity meets the second preset condition.

The first measurement quantity includes at least one of the following:
a signal value or a statistical value of a signal value obtained at a reception reference point, where the signal value or the statistical value includes a channel estimate value obtained on a resource element (Resource Element, RE), for example, a channel estimate on each RE is obtained through measurement on a channel state information reference signal (CSI Reference Signal, CSI-RS), and the channel estimate is used as the first measurement quantity;
a signal-to-noise ratio (Signal-to-Noise Ratio, SNR);
reference signal received power (Reference Signal Received Power, RSRP);
a signal-to-interference-plus-noise ratio (Signal-to-noise and Interference Ratio, SINR);
reference signal received quality (Reference Signal Received Quality, RSRQ);
a packet delay (packet delay);
a round-trip time (Round-Trip Time, RTT);
an observed time difference of arrival (Observed Time Difference of Arrival, OTDOA);
a measurement result corresponding to channel state information (Channel State Information, CSI);
a measurement result corresponding to a reference signal (Reference Signal, RS);
a measurement result used for radio resource management (Radio resource management, RRM) measurement;
a measurement result used for beam failure detection (Beam Failure Detection, BFD) measurement;
a measurement result for radio link failure RLF measurement;
a measurement result corresponding to reference signal RS measurement;
quality of experience (Quality of Experience, QoE) measurement information, where the QoE measurement information includes at least one of a packet loss rate, service delay information, and a throughput; or
image information or image perception information, where the image information or the image perception information includes at least one of information obtained by a camera and information obtained by a sensor.

Optionally, a measurement result corresponding to the first measurement quantity is obtained based on a single measurement, or a measurement result corresponding to the first measurement quantity is obtained based on a plurality of measurements. For example, after a plurality of measurements are performed, results of the plurality of measurements are averaged or filtered, to obtain the measurement result corresponding to the first measurement quantity.

Optionally, a measurement resource corresponding to the first measurement quantity is preconfigured or pre-agreed; and
the measurement resource corresponding to the first measurement quantity includes at least one of the following:
a physical downlink control channel (Physical downlink control channel, PDCCH) demodulation reference signal (Demodulation Reference Signal, DMRS);
a physical downlink shared channel (Physical Downlink Shared Channel, PDSCH) DMRS;
a channel state information reference signal CSI-RS;
a synchronization signal/physical broadcast channel signal block (Synchronization Signal and PBCH block, SSB);
a reference signal used for BFD;
a reference signal used for RRM;
a reference signal used for RLF;
an identifier corresponding to a reference signal used for BFD;
an identifier corresponding to a reference signal used for RRM; or
an identifier corresponding to a reference signal used for RLF.

The second preset condition includes at least one of the following:
an SNR or a specific representation of an SNR conforms to a preconfigured range;
RSRP or a specific representation of RSRP conforms to a preconfigured range;
an SINR or a specific representation of an SINR conforms to a preconfigured range;
RSRQ or a specific representation of RSRQ conforms to a preconfigured range;
a packet delay or a specific representation of a packet delay conforms to a preconfigured range;
an RTT or a specific representation of an RTT conforms to a preconfigured range;
an OTDOA or a specific representation of an OTDOA conforms to a preconfigured range;
a measurement result corresponding to CSI or a specific representation of a measurement result corresponding to CSI conforms to a preconfigured first measurement range;
a measurement result of RRM measurement or a specific representation of a measurement result used for RRM measurement conforms to a preconfigured range;
a measurement result of BFD measurement or a specific representation of a measurement result used for BFD measurement conforms to a preconfigured range;
a measurement result of RLF or a specific representation of a measurement result used for RLF conforms to a preconfigured range;
a measurement result corresponding to an RS or a specific representation of a measurement result corresponding to an RS conforms to a preconfigured second measurement range; or
a measurement result corresponding to QoE measurement information or a specific representation of a measurement result corresponding to QoE measurement information conforms to a preconfigured third measurement range.

Optionally, the radio resource management RRM measurement includes:
serving cell measurement;
neighboring cell measurement;
camped cell measurement; and
non-camped cell measurement.

In a third optional implementation, the first event condition includes:
the first event meets the third preset condition.

The first event includes at least one of the following:
a beam failure recovery (Beam Failure Recovery, BFR) event;
a radio link failure (Radio Link Failure, RLF) event;
radio resource management (Radio Resource Management, RRM) measurement;
a handover event such as a cell handover event;
a measurement result event corresponding to BFR;
a measurement result event corresponding to RLF; or
an event that triggers RRM measurement.

The third preset condition includes at least one of the following:
a measurement result corresponding to a BFR event or a specific representation corresponding to a BFR event conforms to a preconfigured third measurement range;
a measurement result corresponding to an RLF event or a specific representation corresponding to an RLF event conforms to a preconfigured fourth measurement range;
a measurement result corresponding to RRM measurement or a specific representation corresponding to RRM measurement conforms to a preconfigured fifth measurement range; or
a measurement result corresponding to a handover event or a specific representation corresponding to a handover event conforms to a preconfigured sixth measurement range.

The measurement result corresponding to the BFR event or the specific representation corresponding to the BFR event includes at least one of the following:
a measurement result that is in BFR and that is based on a beam failure detection reference signal;
a measurement result that is in BFR and that is based on a new beam; or
a measurement result that is based on an occurrence frequency of the BFR event.

The measurement result corresponding to the RLF event or the specific representation corresponding to the RLF event includes at least one of the following:
a serving cell-based measurement result;
a neighboring cell-based measurement result; or
a measurement result that is based on an occurrence frequency of the RLF event.

The measurement result corresponding to the RRM measurement or the specific representation corresponding to the RRM event includes at least one of the following:
a measurement result corresponding to a serving cell;
a measurement result corresponding to a neighboring cell;
a measurement result corresponding to a camped cell;
a measurement result corresponding to a non-camped cell; or
frequencies corresponding to various types of RRM measurement reporting events.

The measurement result corresponding to the handover event or the specific representation corresponding to the handover event includes at least one of the following:
a TA corresponding to a source cell;
a TA corresponding to a target cell;
data interruption duration;
a result of a signal quality difference before and after handover;
a measurement statistical quantity obtained during a handover process; or
a handover frequency.

In a fourth optional implementation, the first identifier condition includes:
the first identifier meets the fourth preset condition.

The first identifier includes at least one of the following:
a cell identifier; or
a public land mobile network (Public Land Mobile Network, PLMN) identifier.

The fourth preset condition includes at least one of the following:
a cell identifier is an identifier in a preconfigured cell identifier list; or
a PLMN identifier is an identifier in a preconfigured PLMN identifier list.

In a fifth optional implementation, the first transmission parameter condition includes:
the first transmission parameter meets the fifth preset condition.

The first transmission parameter includes at least one of the following:
a channel feature parameter;
phase information between different transmitting antennas or between different transmitting ports;
a measurement parameter obtained on one or more beams;
information corresponding to different beam pairs, where the beam pair includes a transmit beam and a receive beam;
a measurement parameter obtained on one or more frequencies;
data demodulation soft information;
a bit error rate or a block error rate of transmission of a data packet, where the data packet includes one or more of the following: a physical layer data packet, a medium access control (Medium Access Control, MAC) layer data packet, a radio link control (Radio Link Control, RLC) layer data packet, a packet data convergence protocol (Packet Data Convergence Protocol, PDCP) layer data packet, and an internet protocol (Internet Protocol, IP) layer data packet; or
interference measurement information.

The fifth preset condition includes at least one of the following:
a channel feature parameter or a specific representation of a channel feature parameter conforms to a preconfigured parameter range;
a beam measurement parameter or a representation channel feature parameter to a beam measurement parameter conforms to a preset configured parameter range;
phase information between different transmitting antennas or between different transmitting ports or a specific representation of the phase information conforms to preconfigured phase information;
information corresponding to different receive beams or a specific representation of information corresponding to different receive beams conforms to preconfigured first beam information;
information corresponding to different beam pairs or a specific representation of information corresponding to different beam pairs conforms to preconfigured second beam information;
a measurement parameter obtained on one or more frequencies conforms to a preconfigured parameter range;
data demodulation soft information or a specific representation of data demodulation soft information conforms to preconfigured information;
a bit error rate of transmission of a data packet or a specific representation of a bit error rate of transmission of a data packet conforms to preconfigured information, where the data packet includes one or more of the following: a physical layer data packet, a MAC layer data packet, an RLC layer data packet, a PDCP layer data packet, and an IP layer data packet;
a block error rate or a specific representation of a block error rate conforms to a preconfigured information; or
interference measurement information or a specific representation of interference measurement information conforms to preconfigured information.

In a sixth optional implementation, the application layer related condition includes:
the application layer configuration information meets the sixth preset condition.

Optionally, the first configuration condition includes:
the first configuration meets the seventh preset condition.

Optionally, the first configuration includes one or more of the following:
specific second information configured for reporting; and
content for configuring the second information.

Optionally, the first condition further includes:
an information processing manner corresponding to the first condition conforms to a preconfigured manner.

Information corresponding to the first condition includes one or more of the following:
the location in which the terminal is located;
the first measurement quantity;
the first event;
the first identifier;
the first transmission parameter;
the application layer configuration information; or
the first configuration.

Optionally, before the terminal performs the first operation, the method further includes:
obtaining a first neural network; and
determining, based on an output of the first neural network, whether the first condition is met.

Optionally, the obtaining a first neural network includes:
obtaining neural network information sent by a first preset node, where the neural network information indicates at least one neural network; and
determining, based on first indication information sent by a second preset node, the first neural network from the at least one neural network indicated by the neural network information.

The first preset node and the second preset node may be the same preset node, or may be different preset nodes.

The first preset node and a third preset node are different nodes, or the second preset node and a third preset node are different nodes, where
the third preset node is a node that sends the first condition to the terminal.

Optionally, the first preset node or the second preset node or the third preset node includes at least one of the following:
a base station;
a positioning management function node;
a network data analytics function node;
an operation and maintenance management node; or
a core network reserved node.

In this embodiment of the present application, the terminal may exchange neural network related information (the neural network related information may be related information of one neural network, or may be related information of a plurality of neural networks, for example, related information of a neural network list) with (one or more) preset nodes. The neural network related information includes information such as a neural network parameter and a neural network structure.

Herein, the preset node for exchanging the neural network related information and the preset node for exchanging the first condition may be different nodes. For example, a preset node A exchanges a neural network set with the terminal, a preset node B exchanges the first condition with the terminal, and a preset node C controls a neural network used by the terminal. The preset node for exchanging the neural network related information includes but is not limited to: a base station, a location management function (Location Management Function, LMF), a network data analytics function (Network Data Analytics Function, NWDAF), an operations, administration, and management (Operation Administration and Management, OAM) node, or another core network node.

Input information of the first neural network includes at least one of the following:
information about the location in which the terminal is located;
information about the first measurement quantity;
information about the first event;
information about the first identifier;
information about the first transmission parameter;
the application layer configuration information; or
first configuration information.

In this embodiment of the present application, the first neural network may be used to determine whether the first condition is met. Specifically, correspondences between the first neural network and the input information in different application scenarios may be preconfigured. In a specific application scenario, corresponding input information is selected for inputting, without inputting all information. For example, in a positioning scenario, the input information of the first neural network is configured as the information about the location in which the terminal is located, so that the terminal can select only the information about the location in which the terminal is located as the input information, thereby effectively reducing signaling overheads.

Specifically, for the foregoing first optional implementation, the input information of the first neural network may be the information about the location in which the terminal is located. The information about the location in which the terminal is located includes at least one of a cell in which the terminal is located, a TA in which the terminal is located, an RNA in which the terminal is located, or a geographical location in which the terminal is located. In this implementation, the information about the location in which the terminal is located is input into the first neural network, and whether to perform the first operation is determined based on an output result of the first neural network.

For the foregoing second optional implementation, the input information of the first neural network may be the first measurement quantity information. The first measurement quantity information includes at least one of a measurement result corresponding to an SNR, RSRP, a SINR, RSRQ, a packet delay, an RTT, an OTDOA, a measurement result corresponding to CSI, and a measurement result corresponding to an RS. In this implementation, an interval (range) corresponding to the first measurement quantity information is preconfigured, for example, a corresponding SNR interval, RSRP interval, SINR interval, RSRQ interval, or packet delay interval, or the like is preconfigured. In addition, measurement resource information corresponding to the first measurement quantity information is configured, for example, a physical downlink control channel (Physical downlink control channel, PDCCH), a physical downlink shared channel demodulation reference signal (Demodulation Reference Signal, DMRS), a CSI reference signal (CSI Reference Signal, CSI-RS), a synchronization signal/physical broadcast channel signal block (Synchronization Signal and PBCH block, SSB), a data radio bearer (Data Radio Bearer, DRB), and a corresponding identifier (Identifier, ID). Measurement is performed based on a preconfigured measurement interval and a measurement resource to obtain the first measurement quantity, and the first measurement quantity is input into the first neural network. The neural network is used to determine whether to perform the first operation. In addition, the first measurement quantity includes a measurement result corresponding to a corresponding layer 1, layer 2, and/or layer 3.

For the foregoing third optional implementation, the input information of the first neural network may be the information about the first event. The information about the first event includes at least one of a measurement result corresponding to a BFR event or a specific representation corresponding to a BFR event, a measurement result corresponding to an RLF event or a specific representation corresponding to an RLF event, a measurement result corresponding to RRM measurement or a specific representation corresponding to an RRM event, a measurement result corresponding to a handover event, and a specific representation corresponding to a handover event. Herein, the measurement result corresponding to each event is described in detail in the description above. Details are not described herein again. In this implementation, the result corresponding to each event is input into the first neural network, and the first neural network is used to determine whether to perform the first operation.

For the foregoing fourth optional implementation, the input information of the first neural network may be the information about the first identifier, and the information about the first identifier includes at least one of a cell identifier and a PLMN identifier. In this implementation, one or more first identifiers (cell identifiers or PLMN identifiers) are input into the first neural network, and whether to perform the first operation is determined based on the first neural network.

For the fifth optional implementation, the input information of the first neural network may be the information about the first transmission parameter, and the information about the first transmission parameter includes: at least one of a channel feature parameter; phase information between different transmitting antennas or between different transmitting ports; information corresponding to different receive beams; information corresponding to different beam pairs, where the beam pairs include a transmit beam and a receive beam; and a transmission frequency. In this implementation, the information about the first transmission parameter is input into the first neural network, and the first neural network is used to determine whether to perform the first operation.

For the foregoing sixth optional implementation, the input information of the first neural network may be the application layer configuration information, such as shooting information. In this implementation, the application layer configuration information is input into the first neural network, and the first neural network is used to determine whether to perform the first operation.

In this embodiment of the present application, a preset compression manner varies with an application scenario.

Optionally, that the terminal compresses the second information in a preset compression manner includes:
the terminal compresses the second information based on a second neural network, where input information of the second neural network includes the input information of the first neural network; or
the terminal compresses the second information based on a large-scale parameter, for example, collects statistics on large-scale distribution information (such as multipath time-domain probability distribution information) of a key parameter corresponding to information that meets the first condition, and information obtained through statistics collection is used as compressed second information;
the terminal compresses the second information by merging a plurality of parts of the second information; or
the terminal performs mathematical operations on a plurality of parts of the second information to obtain a statistical feature, and reports the statistical feature; or
the terminal compresses the second information in a differencing manner; or
the terminal compresses the second information based on a type of the second information; or
the terminal compresses the second information based on a priority of the second information; or
the terminal compresses, based on an association relationship between two pieces of second information, the second information.

Further, the differencing manner includes at least one of the following:
differencing by time;
differencing by location; or
differencing by target parameter, where the target parameter includes at least one of a tracking area TA, a frequency, a public land mobile network, connection information, and a quality of service flow (QoS Flow), for example, differential compression is performed on two different TAs, or differential compression is performed on two different pieces of connection information.

In this embodiment of the present application, for example, only a small part of content is different between second information A and second information B. In this case, only a different part of the second information B may be compressed based on the second information A.

Further, that the terminal compresses the second information based on a type of the second information includes:
obtaining a type corresponding to each piece of second information; and
selecting second information corresponding to a target type as the compressed second information.

Further, that the terminal compresses the second information based on a priority of the second information includes:
obtaining a priority corresponding to each piece of second information; and
selecting second information with a priority higher than a preset priority as the compressed second information.

Further, at least two of the following information types in the second information reported by the terminal are associated:
time information;
measurement result information;
location information;
event information; and
channel feature information.

Optionally, the first condition is configured by a network or pre-agreed.

Optionally, the preset compression manner is configured by a network or pre-agreed.

Optionally, different first target information corresponds to different first conditions or preset compression manners, and the first target information includes at least one of the following:
a cell;
a TA area;
a frequency;
a PLMN;
connection information;
a QoS flow (Flow); or
a bandwidth part BWP.

Optionally, the method in this embodiment of the present application further includes:
in a case that the first target information is replaced, replacing a corresponding first condition or preset compression manner.

Optionally, each piece of first target information corresponds to at least one first condition or at least one preset compression manner.

Optionally, configuration signaling of the first condition or the preset compression manner is the same as configuration signaling of the first target information.

For example, for different application scenarios such as cell handover and TA area update, different frequencies, and different BWP scenarios, the terminal uses different first conditions and compression manners.

First conditions and compression manners corresponding to different application scenarios may be preconfigured, and when a corresponding event occurs, a corresponding condition and compression manner are used according to the pre-configuration.

First conditions and compression manners corresponding to different application scenarios are configured or activated by using the same signaling as corresponding events. For example, a corresponding condition and compression method are configured by using cell handover signaling; a corresponding condition and compression method are activated by using BWP activation signaling.

The first neural network and the second neural network may be the same neural network or different neural networks.

Optionally, before the terminal performs the first operation in a case that a first condition is met, the method further includes:
obtaining second indication information, where the second indication information indicates index information corresponding to at least one of the first condition and the preset compression manner; and
determining, based on the second indication information, at least one of a first condition and a preset compression manner corresponding to the second indication information.

Optionally, a reporting granularity of the second information includes at least one of the following:
each terminal;
each cell;
each frequency layer;
each BWP;
each transmitting antenna port; or
each receiving antenna port.

During preconfiguration of a first condition and a compression manner for the preset node, an application scenario corresponding to the first condition and the compression manner may be further indicated, or different identifiers are used to represent different data collection profiles (profiles).

The first condition and the compression manner preconfigured by the preset node may be modified and deleted, which may be periodic or event-triggered. Indications of the modification and deletion may use IDs used for representing different data collection profiles.

Optionally, the second information includes at least one of the following: target information;
representation information of target information;
measurement information corresponding to target information;
neural network usage information corresponding to target information;
whether target information meets the first condition; or
value information corresponding to target information, where the target information includes at least one of the following:
   information about the location in which the terminal is located;
   information about the first measurement quantity;
   information about the first event;
   information about the first identifier;
   information about the first transmission parameter;
   the application layer configuration information; or
   first configuration information.

Optionally, the representation information of the target information is indicated by information corresponding to a neural network.

Optionally, the reporting second information includes:
reporting the compressed second information according to a predefined period; or
triggering reporting of the compressed second information based on a trigger condition, where
the trigger condition includes at least one of the following:
   reporting indication information sent by a network is received;
   a predefined event occurs; or
   a quantity of pieces of second information reaches a preset threshold.

According to the information processing method in this embodiment of the present application, the following is performed only in a case that a first condition is met: collecting statistics to obtain first information; generating a first report; reporting second information; and/or compressing second information in a preset compression manner, and reporting compressed second information, so that air interface overheads can be reduced to some extent.

It should be noted that, the information processing method provided in this embodiment of the present application may be performed by an information processing apparatus, or a control module in the information processing apparatus for performing the information processing method. In embodiments of the present application, that the information processing apparatus performs the information processing method is used as an example to describe the information processing apparatus provided in embodiments of the present application.

As shown in FIG 3, an embodiment of the present application further provides an information processing apparatus 300, including:
a first processing module 301, configured to perform a first operation in a case that a first condition is met.

The first condition includes at least one of the following:
a location in which the terminal is located meets a first preset condition;
a first measurement quantity meets a second preset condition;
a first event meets a third preset condition;
a first identifier meets a fourth preset condition;
a first transmission parameter meets a fifth preset condition;
application layer configuration information meets a sixth preset condition; or
a first configuration meets a seventh preset condition.

The first operation includes one or more of the following:
collecting statistics to obtain first information;
generating a first report;
reporting second information; and
compressing the second information in a preset compression manner, and reporting compressed second information.

Optionally, the apparatus in this embodiment of the present application may further include:
a first determining module, configured to determine the first condition.

Optionally, the first location condition includes:
the location in which the terminal is located meets the first preset condition.

Optionally, the location in which the terminal is located includes at least one of the following:
a cell in which the terminal is located;
a tracking area TA in which the terminal is located;
a radio access network-based notification area RNA in which the terminal is located;
a geographical location in which the terminal is located; or
a timing advance TA indicated by a network to the terminal.

Optionally, the first preset condition includes at least one of the following:
a specific representation of the terminal or the location of the terminal conforms to a preconfigured range corresponding to a cell identifier;
a specific representation of the terminal or the location of the terminal conforms to a preconfigured range corresponding to a tracking area;
a specific representation of the terminal or the location of the terminal conforms to a preconfigured range corresponding to a geographical location;
a specific representation of the terminal or the location of the terminal conforms to a preconfigured range corresponding to a radio access network-based notification area RNA; or
a specific representation of the terminal or the location of the terminal conforms to a preconfigured range corresponding to a timing advance TA.

Optionally, the first measurement quantity condition includes:
the first measurement quantity meets the second preset condition.

Optionally, the first measurement quantity includes at least one of the following:
a signal value or a statistical value of a signal value obtained at a reception reference point, where the signal value or the statistical value includes a channel estimate value obtained on a resource element RE;
a signal-to-noise ratio SNR;
reference signal received power RSRP;
a signal to interference plus noise ratio SINR;
reference signal received quality RSRQ;
a packet delay (packet delay);
a round-trip time RTT;
an observed time difference of arrival OTDOA;
a measurement result corresponding to channel state information CSI;
a measurement result used for radio resource management RRM measurement;
a measurement result used for beam failure detection BFD measurement;
a measurement result for radio link failure RLF measurement;
a measurement result corresponding to reference signal RS measurement;
quality of experience QoE measurement information, where the QoE measurement information includes at least one of a packet loss rate, service delay information, and a throughput; or
image information or image perception information, where the image information or the image perception information includes at least one of information obtained by a camera and information obtained by a sensor.

Optionally, a measurement result corresponding to the first measurement quantity is obtained based on a single measurement, or a measurement result corresponding to the first measurement quantity is obtained based on a plurality of measurements.

Optionally, a measurement resource corresponding to the first measurement quantity is preconfigured or pre-agreed; and
the measurement resource corresponding to the first measurement quantity includes at least one of the following:
a physical downlink control channel PDCCH demodulation reference signal DMRS;
a physical downlink shared channel PDSCH DMRS;
a channel state information reference signal CSI-RS;
a synchronization signal/physical broadcast channel signal block SSB;
a reference signal used for BFD;
a reference signal used for RRM;
a reference signal used for RLF;
an identifier corresponding to a reference signal used for BFD;
an identifier corresponding to a reference signal used for RRM; or
an identifier corresponding to a reference signal used for RLF.

Optionally, the second preset condition includes at least one of the following:
an SNR or a specific representation of an SNR conforms to a preconfigured range;
an RSRP or a specific representation of an RSRP conforms to a preconfigured range;
an SINR or a specific representation of an SINR conforms to a preconfigured range;
RSRQ or a specific representation of RSRQ conforms to a preconfigured range;
a packet delay or a specific representation of a packet delay conforms to a preconfigured range;
an RTT or a specific representation of an RTT conforms to a preconfigured range;
an OTDOA or a specific representation of an OTDOA conforms to a preconfigured range;
a measurement result corresponding to CSI or a specific representation of a measurement result corresponding to CSI conforms to a preconfigured first measurement range;
a measurement result of RRM measurement or a specific representation of a measurement result used for RRM measurement conforms to a preconfigured range;
a measurement result of BFD measurement or a specific representation of a measurement result used for BFD measurement conforms to a preconfigured range;
a measurement result of RLF or a specific representation of a measurement result used for RLF conforms to a preconfigured range;
a measurement result corresponding to an RS or a specific representation of a measurement result corresponding to an RS conforms to a preconfigured second measurement range; or
a measurement result corresponding to QoE measurement information or a specific representation of a measurement result corresponding to QoE measurement information conforms to a preconfigured third measurement range.

Optionally, the radio resource management RRM measurement includes:
serving cell measurement;
neighboring cell measurement;
camped cell measurement; and
non-camped cell measurement.

Optionally, the first event condition includes:
the first event meets the third preset condition.

Optionally, the first event includes at least one of the following:
a beam failure recovery BFR event;
a radio link failure RLF event;
radio resource management RRM measurement;
a handover event;
a measurement result event corresponding to BFR;
a measurement result event corresponding to RLF; or
an event that triggers RRM measurement.

Optionally, the third preset condition includes at least one of the following:
a measurement result corresponding to a BFR event or a specific representation corresponding to a BFR event conforms to a preconfigured third measurement range;
a measurement result corresponding to an RLF event or a specific representation corresponding to an RLF event conforms to a preconfigured fourth measurement range;
a measurement result corresponding to RRM measurement or a specific representation corresponding to RRM measurement conforms to a preconfigured fifth measurement range; or
a measurement result corresponding to a handover event or a specific representation corresponding to a handover event conforms to a preconfigured sixth measurement range.

Optionally, the measurement result corresponding to the BFR event or the specific representation corresponding to the BFR event includes at least one of the following:
a measurement result that is in BFR and that is based on a beam failure detection reference signal;
a measurement result that is in BFR and that is based on a new beam; or
a measurement result that is based on an occurrence frequency of the BFR event.

Optionally, the measurement result corresponding to the RLF event or the specific representation corresponding to the RLF event includes at least one of the following:
a serving cell-based measurement result;
a neighboring cell-based measurement result; or
a measurement result that is based on an occurrence frequency of the RLF event.

Optionally, the measurement result corresponding to the RRM measurement or the specific representation corresponding to the RRM event includes at least one of the following:
a measurement result corresponding to a serving cell;
a measurement result corresponding to a neighboring cell;
a measurement result corresponding to a camped cell;
a measurement result corresponding to a non-camped cell; or
frequencies corresponding to various types of RRM measurement reporting events.

Optionally, the measurement result corresponding to the handover event or the specific representation corresponding to the handover event includes at least one of the following:
a TA corresponding to a source cell;
a TA corresponding to a target cell;
data interruption duration;
a result of a signal quality difference before and after handover;
a measurement statistical quantity obtained during a handover process; or
a handover frequency.

Optionally, the first identifier condition includes:
the first identifier meets the fourth preset condition.

Optionally, the first identifier includes at least one of the following:
a cell identifier; and
a public land mobile network PLMN identifier.

Optionally, the fourth preset condition includes at least one of the following:
a cell identifier is an identifier in a preconfigured cell identifier list; or
a PLMN identifier is an identifier in a preconfigured PLMN identifier list.

Optionally, the first transmission parameter condition includes:
the first transmission parameter meets the fifth preset condition.

Optionally, the first transmission parameter includes at least one of the following:
a channel feature parameter;
phase information between different transmitting antennas or between different transmitting ports;
a measurement parameter obtained on one or more beams;
information corresponding to different beam pairs, where the beam pair includes a transmit beam and a receive beam;
a measurement parameter obtained on one or more frequencies;
data demodulation soft information;
a bit error rate or a block error rate of transmission of a data packet, where the data packet includes one or more of the following: a physical layer data packet, a MAC layer data packet, an RLC layer data packet, a PDCP layer data packet, and an IP layer data packet; or
interference measurement information.

Optionally, the fifth preset condition includes at least one of the following:
a channel feature parameter or a specific representation of a channel feature parameter conforms to a preconfigured parameter range;
a beam measurement parameter or a representation channel feature parameter to a beam measurement parameter conforms to a preset configured parameter range;
phase information between different transmitting antennas or between different transmitting ports or a specific representation of the phase information conforms to preconfigured phase information;
information corresponding to different receive beams or a specific representation of information corresponding to different receive beams conforms to preconfigured first beam information;
information corresponding to different beam pairs or a specific representation of information corresponding to different beam pairs conforms to preconfigured second beam information;
a measurement parameter obtained on one or more frequencies conforms to a preconfigured parameter range;
data demodulation soft information or a specific representation of data demodulation soft information conforms to preconfigured information;
a bit error rate of transmission of a data packet or a specific representation of a bit error rate of transmission of a data packet conforms to preconfigured information, where the data packet includes one or more of the following: a physical layer data packet, a MAC layer data packet, an RLC layer data packet, a PDCP layer data packet, and an IP layer data packet;
a block error rate or a specific representation of a block error rate conforms to a preconfigured information; or
interference measurement information or a specific representation of interference measurement information conforms to preconfigured information.

Optionally, the application layer related condition includes:
the application layer configuration information meets the sixth preset condition.

Optionally, the first condition further includes:
an information processing manner corresponding to the first condition conforms to a preconfigured manner.

Optionally, the first configuration condition includes:
the first configuration meets the seventh preset condition.

Optionally, the first configuration includes one or more of the following:
specific second information configured for reporting; and
content for configuring the second information.

Optionally, the apparatus in this embodiment of the present application further includes:
a first obtaining module, configured to: before the first processing module performs the first operation, obtain a first neural network; and
a second determining module, configured to determine, based on an output of the first neural network, whether the first condition is met.

Optionally, the first obtaining module includes:
a first obtaining submodule, configured to obtain neural network information sent by a first preset node, where the neural network information indicates at least one neural network; and
a first determining submodule, configured to determine, based on first indication information sent by a second preset node, the first neural network from the at least one neural network indicated by the neural network information.

Optionally, the first preset node and a third preset node are different nodes, or the second preset node and a third preset node are different nodes, where
the third preset node is a node that sends the first condition to the terminal.

Optionally, the first preset node or the second preset node or the third preset node includes at least one of the following:
a base station;
a positioning management function node;
a network data analytics function node;
an operation and maintenance management node; or
a core network reserved node.

Optionally, input information of the first neural network includes at least one of the following:
information about the location in which the terminal is located;
information about the first measurement quantity;
information about the first event;
information about the first identifier;
information about the first transmission parameter;
the application layer configuration information; or
first configuration information.

Optionally, in the apparatus in this embodiment of the present application, the first processing module is configured to: compress the second information based on a second neural network; or
compress the second information based on a large-scale parameter; or
compress the second information by merging a plurality of parts of the second information; or
perform mathematical operations on a plurality of parts of the second information to obtain a statistical feature, and reporting the statistical feature; or
compress the second information in a differencing manner; or
compress the second information based on a type of the second information; or
compress the second information based on a priority of the second information; or
compress the second information, based on an association relationship between two pieces of second information.

Optionally, the differencing manner includes at least one of the following:
differencing by time;
differencing by location; or
differencing by target parameter, where the target parameter includes at least one of a tracking area TA, a frequency, a public land mobile network, connection information, and a quality of service flow QoS Flow.

Optionally, the first processing module includes:
a second obtaining submodule, configured to obtain a type corresponding to each piece of second information; and
a first selection submodule, configured to select second information corresponding to a target type as the compressed second information.

Optionally, the first processing module includes:
a third obtaining submodule, configured to obtain a priority corresponding to each piece of second information; and
a second selection submodule, configured to select second information with a priority higher than a preset priority as the compressed second information.

Optionally, at least two of the following information types in the second information reported by the terminal are associated:
time information;
measurement result information;
location information;
event information; and
channel feature information.

Optionally, the first condition is configured by a network or pre-agreed.

Optionally, the preset compression manner is configured by a network or pre-agreed.

Optionally, different first target information corresponds to different first conditions or preset compression manners, and the first target information includes at least one of the following:
a cell;
a TA area;
a frequency;
a PLMN;
connection information;
a QoS flow (Flow); or
a bandwidth part BWP.

Optionally, the apparatus in this embodiment of the present application further includes:
an updating module, configured to: in a case that the first target information is replaced, replace a corresponding first condition or preset compression manner.

Optionally, each piece of first target information corresponds to at least one first condition or at least one preset compression manner.

Optionally, configuration signaling of the first condition or the preset compression manner is the same as configuration signaling of the first target information.

Optionally, the apparatus in this embodiment of the present application further includes:
a second obtaining module, configured to: before the first processing module performs the first operation, obtain second indication information, where the second indication information indicates index information corresponding to at least one of the first condition and the preset compression manner; and
a third determining module, configured to determine, based on the second indication information, at least one of a first condition and a preset compression manner corresponding to the second indication information.

Optionally, a reporting granularity of the second information includes at least one of the following:
each terminal;
each cell;
each frequency layer;
each BWP;
each transmitting antenna port; or
each receiving antenna port.

Optionally, the second information includes at least one of the following:
target information;
representation information of target information;
measurement information corresponding to target information;
neural network usage information corresponding to target information;
whether target information meets the first condition; or
value information corresponding to target information, where the target information includes at least one of the following:
   information about the location in which the terminal is located;
   information about the first measurement quantity;
   information about the first event;
   information about the first identifier;
   information about the first transmission parameter;
   the application layer configuration information; or
   first configuration information.

Optionally, the representation information of the target information is indicated by information corresponding to a neural network.

Optionally, the first processing module is configured to: report the compressed second information according to a predefined period; or
trigger reporting of the compressed second information based on a trigger condition, where
the trigger condition includes at least one of the following:
   reporting indication information sent by a network is received;
   a predefined event occurs; or
   a quantity of pieces of second information reaches a preset threshold.

In this embodiment of the present application, the following is performed only in a case that a first condition is met: collecting statistics to obtain first information; generating a first report; reporting second information; and/or compressing second information in a preset compression manner, and reporting compressed second information, so that air interface overheads can be reduced to some extent.

The information processing apparatus in this embodiment of the present application may be an apparatus, or an apparatus or electronic device with an operating system, or may be a component, an integrated circuit, or a chip in a terminal. The apparatus or electronic device may be a mobile terminal, or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in embodiments of the present application.

The apparatus provided in this embodiment of the present application can implement the processes implemented in the method embodiment shown in FIG 2 and achieve the same technical effect. To avoid repetition, details are not described herein again.

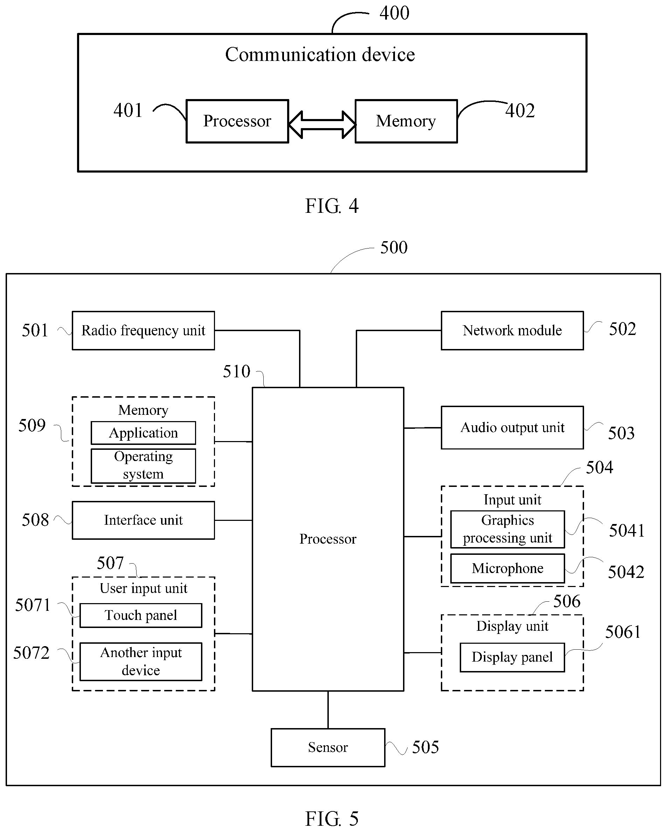

Optionally, as shown in FIG 4, an embodiment of the present application further provides a communication device 400, including a processor 401, a memory 402, a program or instructions stored in the memory 402 and executable on the processor 401. For example, when the communication device 400 is a terminal, the program or the instructions are executed by the processor 401 to implement processes of the embodiment of the foregoing information processing method applied to the terminal, with the same technical effect achieved. To avoid repetition, details are not described herein again.

An embodiment of the present application further provides a terminal, including a processor and a communication interface. The processor is configured to:
perform a first operation in a case that a first condition is met, where
the first condition includes at least one of the following:
   a location in which the terminal is located meets a first preset condition;
   a first measurement quantity meets a second preset condition;
   a first event meets a third preset condition;
   a first identifier meets a fourth preset condition;
   a first transmission parameter meets a fifth preset condition;
   application layer configuration information meets a sixth preset condition; or
   a first configuration meets a seventh preset condition.

The first operation includes one or more of the following:
collecting statistics to obtain first information;
generating a first report;
reporting second information; and
compressing the second information in a preset compression manner, and reporting compressed second information.

This terminal embodiment corresponds to the foregoing method embodiment on the terminal side. Each implementation process and implementation of the foregoing method embodiment are applicable to this terminal embodiment, with the same technical effect achieved. Specifically, FIG 5 is a schematic diagram of a hardware structure of a terminal according to an embodiment of the present application. The terminal 500 includes but is not limited to at least some of components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power supply (such as a battery) that supplies power to each component. The power supply may be logically connected to the processor 510 by using a power supply management system, to implement functions such as charging and discharging management, and power consumption management by using the power supply management system. The terminal structure shown in FIG 5 constitutes no limitation on the terminal, and the terminal may include more or fewer components than those shown in the figure, or combine some components, or have different component arrangements. Details are not described herein.

It should be understood that, in embodiments of the present application, the input unit 504 may include a graphics processing unit (Graphics Processing Unit, GPU) 5041 and a microphone 5042, and the graphics processing unit 5041 processes image data of a still picture or video obtained by an image capture apparatus (such as a camera) in a video capture mode or an image capture mode. The display unit 506 may include a display panel 5061. Optionally, the display panel 5061 may be configured in a form such as a liquid crystal display or an organic light-emitting diode. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein.

In this embodiment of the present application, the radio frequency unit 501 receives downlink data from a network side device and then sends the downlink data to the processor 510 for processing; and sends uplink data to the network side device. Usually, the radio frequency unit 501 includes but is not limited to an antenna, at least one amplifier, a transceiver, a coupler, a low noise amplifier, a duplexer, and the like.

The memory 509 may be configured to store a software program or an instruction and various data. The memory 509 may mainly include a program or instruction storage area and a data storage area. The program or instruction storage area may store an operating system, and an application or an instruction required by at least one function (for example, a sound playing function or an image playing function). In addition, the memory 509 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 510 may include one or more processing units. Optionally, an application processor and a modem processor may be integrated into the processor 510. The application processor mainly processes an operating system, a user interface, an application, an instruction, or the like. The modem processor mainly processes wireless communication, for example, a baseband processor.

It can be understood that, alternatively, the modem processor may not be integrated into the processor 510.

The processor 510 is configured to perform a first operation in a case that a first condition is met, where
the first condition includes at least one of the following:
a location in which the terminal is located meets a first preset condition;
a first measurement quantity meets a second preset condition;
a first event meets a third preset condition;
a first identifier meets a fourth preset condition;
a first transmission parameter meets a fifth preset condition;
application layer configuration information meets a sixth preset condition; or
a first configuration meets a seventh preset condition.

The first operation includes one or more of the following:
collecting statistics to obtain first information;
generating a first report;
reporting second information; and
compressing the second information in a preset compression manner, and reporting compressed second information.

Optionally, the location in which the terminal is located includes at least one of the following:
a cell in which the terminal is located;
a tracking area TA in which the terminal is located;
a radio access network-based notification area RNA in which the terminal is located;
a geographical location in which the terminal is located; or
a timing advance TA indicated by a network to the terminal.

Optionally, the first preset condition includes at least one of the following:
a specific representation of the terminal or the location of the terminal conforms to a preconfigured range corresponding to a cell identifier;
a specific representation of the terminal or the location of the terminal conforms to a preconfigured range corresponding to a tracking area;
a specific representation of the terminal or the location of the terminal conforms to a preconfigured range corresponding to a geographical location;
a specific representation of the terminal or the location of the terminal conforms to a preconfigured range corresponding to a radio access network-based notification area RNA; or
a specific representation of the terminal or the location of the terminal conforms to a preconfigured range corresponding to a timing advance TA.

Optionally, the first measurement quantity includes at least one of the following:
a signal value or a statistical value of a signal value obtained at a reception reference point, where the signal value or the statistical value includes a channel estimate value obtained on a resource element RE;
a signal-to-noise ratio SNR;
reference signal received power RSRP;
a signal to interference plus noise ratio SINR;
reference signal received quality RSRQ;
a packet delay (packet delay);
a round-trip time RTT;
an observed time difference of arrival OTDOA;
a measurement result corresponding to channel state information CSI;
a measurement result used for radio resource management RRM measurement;
a measurement result used for beam failure detection BFD measurement;
a measurement result for radio link failure RLF measurement;
a measurement result corresponding to reference signal RS measurement;
quality of experience QoE measurement information, where the QoE measurement information includes at least one of a packet loss rate, service delay information, and a throughput; or
image information or image perception information, where the image information or the image perception information includes at least one of information obtained by a camera and information obtained by a sensor.

Optionally, a measurement result corresponding to the first measurement quantity is obtained based on a single measurement, or a measurement result corresponding to the first measurement quantity is obtained based on a plurality of measurements.

Optionally, a measurement resource corresponding to the first measurement quantity is preconfigured or pre-agreed; and
the measurement resource corresponding to the first measurement quantity includes at least one of the following:
a physical downlink control channel PDCCH demodulation reference signal DMRS;
a physical downlink shared channel PDSCH DMRS;
a channel state information reference signal CSI-RS;
a synchronization signal/physical broadcast channel signal block SSB;
a reference signal used for BFD;
a reference signal used for RRM;
a reference signal used for RLF;
an identifier corresponding to a reference signal used for BFD;
an identifier corresponding to a reference signal used for RRM; or
an identifier corresponding to a reference signal used for RLF.

Optionally, the second preset condition includes at least one of the following:
an SNR or a specific representation of an SNR conforms to a preconfigured range;
an RSRP or a specific representation of an RSRP conforms to a preconfigured range;
an SINR or a specific representation of an SINR conforms to a preconfigured range;
RSRQ or a specific representation of RSRQ conforms to a preconfigured range;
a packet delay or a specific representation of a packet delay conforms to a preconfigured range;
an RTT or a specific representation of an RTT conforms to a preconfigured range;
an OTDOA or a specific representation of an OTDOA conforms to a preconfigured range;
a measurement result corresponding to CSI or a specific representation of a measurement result corresponding to CSI conforms to a preconfigured first measurement range;
a measurement result of RRM measurement or a specific representation of a measurement result used for RRM measurement conforms to a preconfigured range;
a measurement result of BFD measurement or a specific representation of a measurement result used for BFD measurement conforms to a preconfigured range;
a measurement result of RLF or a specific representation of a measurement result used for RLF conforms to a preconfigured range;
a measurement result corresponding to an RS or a specific representation of a measurement result corresponding to an RS conforms to a preconfigured second measurement range; or
a measurement result corresponding to QoE measurement information or a specific representation of a measurement result corresponding to QoE measurement information conforms to a preconfigured third measurement range.

Optionally, the radio resource management RRM measurement includes:
serving cell measurement;
neighboring cell measurement;
camped cell measurement; and
non-camped cell measurement.

Optionally, the first event includes at least one of the following:
a beam failure recovery BFR event;
a radio link failure RLF event;
radio resource management RRM measurement;
a handover event;
a measurement result event corresponding to BFR;
a measurement result event corresponding to RLF; or
an event that triggers RRM measurement.

Optionally, the third preset condition includes at least one of the following:
a measurement result corresponding to a BFR event or a specific representation corresponding to a BFR event conforms to a preconfigured third measurement range;
a measurement result corresponding to an RLF event or a specific representation corresponding to an RLF event conforms to a preconfigured fourth measurement range;
a measurement result corresponding to RRM measurement or a specific representation corresponding to RRM measurement conforms to a preconfigured fifth measurement range; or
a measurement result corresponding to a handover event or a specific representation corresponding to a handover event conforms to a preconfigured sixth measurement range.

Optionally, the measurement result corresponding to the BFR event or the specific representation corresponding to the BFR event includes at least one of the following:
a measurement result that is in BFR and that is based on a beam failure detection reference signal;
a measurement result that is in BFR and that is based on a new beam; or
a measurement result that is based on an occurrence frequency of the BFR event.

Optionally, the measurement result corresponding to the RLF event or the specific representation corresponding to the RLF event includes at least one of the following:
a serving cell-based measurement result;
a neighboring cell-based measurement result; or
a measurement result that is based on an occurrence frequency of the RLF event.

Optionally, the measurement result corresponding to the RRM measurement or the specific representation corresponding to the RRM event includes at least one of the following:
a measurement result corresponding to a serving cell;
a measurement result corresponding to a neighboring cell;
a measurement result corresponding to a camped cell;
a measurement result corresponding to a non-camped cell; or
frequencies corresponding to various types of RRM measurement reporting events.

Optionally, the measurement result corresponding to the handover event or the specific representation corresponding to the handover event includes at least one of the following:
a TA corresponding to a source cell;
a TA corresponding to a target cell;
data interruption duration;
a result of a signal quality difference before and after handover;
a measurement statistical quantity obtained during a handover process; or
a handover frequency.

Optionally, the first identifier includes at least one of the following:
a cell identifier; and
a public land mobile network PLMN identifier.

Optionally, the fourth preset condition includes at least one of the following:
a cell identifier is an identifier in a preconfigured cell identifier list; or
a PLMN identifier is an identifier in a preconfigured PLMN identifier list.

Optionally, the first transmission parameter includes at least one of the following:
a channel feature parameter;
phase information between different transmitting antennas or between different transmitting ports;
a measurement parameter obtained on one or more beams;
information corresponding to different beam pairs, where the beam pair includes a transmit beam and a receive beam;
a measurement parameter obtained on one or more frequencies;
data demodulation soft information;
a bit error rate or a block error rate of transmission of a data packet, where the data packet includes one or more of the following: a physical layer data packet, a MAC layer data packet, an RLC layer data packet, a PDCP layer data packet, and an IP layer data packet; or
interference measurement information.

Optionally, the fifth preset condition includes at least one of the following:
a channel feature parameter or a specific representation of a channel feature parameter conforms to a preconfigured parameter range;
a beam measurement parameter or a representation channel feature parameter to a beam measurement parameter conforms to a preset configured parameter range;
phase information between different transmitting antennas or between different transmitting ports or a specific representation of the phase information conforms to preconfigured phase information;
information corresponding to different receive beams or a specific representation of information corresponding to different receive beams conforms to preconfigured first beam information;
information corresponding to different beam pairs or a specific representation of information corresponding to different beam pairs conforms to preconfigured second beam information;
a measurement parameter obtained on one or more frequencies conforms to a preconfigured parameter range;
data demodulation soft information or a specific representation of data demodulation soft information conforms to preconfigured information;
a bit error rate of transmission of a data packet or a specific representation of a bit error rate of transmission of a data packet conforms to preconfigured information, where the data packet includes one or more of the following: a physical layer data packet, a MAC layer data packet, an RLC layer data packet, a PDCP layer data packet, and an IP layer data packet;
a block error rate or a specific representation of a block error rate conforms to a preconfigured information; or
interference measurement information or a specific representation of interference measurement information conforms to preconfigured information.

Optionally, the first condition further includes:
an information processing manner corresponding to the first condition conforms to a preconfigured manner.

Optionally, the first configuration includes one or more of the following:
specific second information configured for reporting; and
content for configuring the second information.

Optionally, before performing the first operation, the processor 510 is further configured to:
obtain a first neural network; and
determine, based on an output of the first neural network, whether the first condition is met.

Optionally, the processor 510 is configured to:
obtain neural network information sent by a first preset node, where the neural network information indicates at least one neural network; and
determine, based on first indication information sent by a second preset node, the first neural network from the at least one neural network indicated by the neural network information.

Optionally, the first preset node and a third preset node are different nodes, or the second preset node and a third preset node are different nodes, where
the third preset node is a node that sends the first condition to the terminal.

Optionally, the first preset node or the second preset node or the third preset node includes at least one of the following:
a base station;
a positioning management function node;
a network data analytics function node;
an operation and maintenance management node; or
a core network reserved node.

Optionally, input information of the first neural network includes at least one of the following:
information about the location in which the terminal is located;
information about the first measurement quantity;
information about the first event;
information about the first identifier;
information about the first transmission parameter;
the application layer configuration information; or
first configuration information.

Optionally, the processor 510 is further configured to:
compress, by the terminal, the second information based on a second neural network; or
compress, by the terminal, the second information based on a large-scale parameter; or
compress by the terminal, the second information by merging a plurality of parts of the second information; or
perform, by the terminal, mathematical operations on a plurality of parts of the second information to obtain a statistical feature, and reporting the statistical feature; or compress, by the terminal, the second information in a differencing manner; or
compress, by the terminal, the second information based on a type of the second information; or
compress, by the terminal, the second information based on a priority of the second information; or
compress, by the terminal based on an association relationship between two pieces of second information, the second information.

Optionally, the differencing manner includes at least one of the following:
differencing by time;
differencing by location; or
differencing by target parameter, where the target parameter includes at least one of a tracking area TA, a frequency, a public land mobile network, connection information, and a quality of service flow QoS Flow.

Optionally, the processor 510 is configured to:
obtain a type corresponding to each piece of second information; and
select second information corresponding to a target type as the compressed second information.

Optionally, the processor 510 is configured to:
obtain a priority corresponding to each piece of second information; and
select second information with a priority higher than a preset priority as the compressed second information.

Optionally, at least two of the following information types in the second information reported by the terminal are associated:
time information;
measurement result information;
location information;
event information; and
channel feature information.

Optionally, the first condition is configured by a network or pre-agreed.

Optionally, the preset compression manner is configured by a network or pre-agreed.

Optionally, different first target information corresponds to different first conditions or preset compression manners, and the first target information includes at least one of the following:
a cell;
a TA area;
a frequency;
a PLMN;
connection information;
a QoS flow (Flow); or
a bandwidth part BWP.

Optionally, the processor 510 is further configured to:
in a case that the first target information is replaced, replace a corresponding first condition or preset compression manner.

Optionally, each piece of first target information corresponds to at least one first condition or at least one preset compression manner.

Optionally, configuration signaling of the first condition or the preset compression manner is the same as configuration signaling of the first target information.

Optionally, before performing the first operation, the processor 510 is further configured to:
obtain second indication information, where the second indication information indicates index information corresponding to at least one of the first condition and the preset compression manner; and
determine, based on the second indication information, at least one of a first condition and a preset compression manner corresponding to the second indication information.

Optionally, a reporting granularity of the second information includes at least one of the following:
each terminal;
each cell;
each frequency layer;
each BWP;
each transmitting antenna port; or
each receiving antenna port.

Optionally, the second information includes at least one of the following:
target information;
representation information of target information;
measurement information corresponding to target information;
neural network usage information corresponding to target information;
whether target information meets the first condition; or
value information corresponding to target information, where
the target information includes at least one of the following:
   information about the location in which the terminal is located;
   information about the first measurement quantity;
   information about the first event;
   information about the first identifier;
   information about the first transmission parameter;
   the application layer configuration information; or
   first configuration information.

Optionally, the representation information of the target information is indicated by information corresponding to a neural network.

Optionally, the processor 510 is further configured to:
report the compressed second information according to a predefined period; or
trigger reporting of the compressed second information based on a trigger condition, where
the trigger condition includes at least one of the following:
   reporting indication information sent by a network is received;
   a predefined event occurs; or
   a quantity of pieces of second information reaches a preset threshold.

In this embodiment of the present application, the following is performed only in a case that a first condition is met: collecting statistics to obtain first information; generating a first report; reporting second information; and/or compressing second information in a preset compression manner, and reporting compressed second information, so that air interface overheads can be reduced to some extent.

An embodiment of the present application further provides a readable storage medium. The readable storage medium may be non-volatile or volatile. The readable storage medium stores a program or an instruction, and the program or the instruction is executed by a processor to implement the processes of the foregoing information processing method embodiment, and a same technical effect can be achieved. To avoid repetition, details are not described herein again.

The processor is a processor in the terminal in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of the present application further provides a chip. The chip includes a processor and a communications interface, the communications interface is coupled to the processor, and the processor is configured to run a program or an instruction to implement processes of the embodiment of the information processing method, and a same technical effect can be achieved. To avoid repetition, details are not described herein again.

It should be understood that the chip mentioned in this embodiment of the present application may also be referred to as a system-level chip, a system chip, a chip system, an on-chip system chip, or the like.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in embodiments of the present application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present application essentially, or the part contributing to related technologies may be implemented in a form of a computer software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in embodiments of the present application.

Embodiments of the present application are described above with reference to the accompanying drawings, but the present application is not limited to the above specific implementations, and the above specific implementations are only illustrative and not restrictive. Under the enlightenment of the present application, those of ordinary skill in the art can make many forms without departing from the purpose of the present application and the protection scope of the claims, all of which fall within the protection of the present application.

## Claims

1. An information processing method, comprising:
performing, by a terminal, a first operation in a case that a first condition is met, wherein
the first condition comprises at least one of the following:
a location in which the terminal is located meets a first preset condition;
a first measurement quantity meets a second preset condition;
a first event meets a third preset condition;
a first identifier meets a fourth preset condition;
a first transmission parameter meets a fifth preset condition;
application layer configuration information meets a sixth preset condition; or
a first configuration meets a seventh preset condition; and
the first operation comprises one or more of the following:
collecting statistics to obtain first information;
generating a first report;
reporting second information; and
compressing the second information in a preset compression manner, and reporting compressed second information.

2. The method according to claim 1, wherein the location in which the terminal is located comprises at least one of the following:
a cell in which the terminal is located;
a tracking area TA in which the terminal is located;
a radio access network-based notification area RNA in which the terminal is located;
a geographical location in which the terminal is located; or
a timing advance TA indicated by a network to the terminal.

3. The method according to claim 1, wherein the first preset condition comprises at least one of the following:
a specific representation of the terminal or the location of the terminal conforms to a preconfigured range corresponding to a cell identifier;
a specific representation of the terminal or the location of the terminal conforms to a preconfigured range corresponding to a tracking area;
a specific representation of the terminal or the location of the terminal conforms to a preconfigured range corresponding to a geographical location;
a specific representation of the terminal or the location of the terminal conforms to a preconfigured range corresponding to a radio access network-based notification area RNA; or
a specific representation of the terminal or the location of the terminal conforms to a preconfigured range corresponding to a timing advance TA.

4. The method according to claim 1, wherein the first measurement quantity comprises at least one of the following:
a signal value or a statistical value of a signal value obtained at a reception reference point, wherein the signal value or the statistical value comprises a channel estimate value obtained on a resource element RE;
a signal-to-noise ratio SNR;
reference signal received power RSRP;
a signal to interference plus noise ratio SINR;
reference signal received quality RSRQ;
a packet delay (packet delay);
a round-trip time RTT;
an observed time difference of arrival OTDOA;
a measurement result corresponding to channel state information CSI;
a measurement result used for radio resource management RRM measurement;
a measurement result used for beam failure detection BFD measurement;
a measurement result for radio link failure RLF measurement;
a measurement result corresponding to reference signal RS measurement;
quality of experience QoE measurement information, wherein the QoE measurement information comprises at least one of a packet loss rate, service delay information, and a throughput; or
image information or image perception information, wherein the image information or the image perception information comprises at least one of information obtained by a camera and information obtained by a sensor.

5. The method according to claim 4, wherein a measurement result corresponding to the first measurement quantity is obtained based on a single measurement, or a measurement result corresponding to the first measurement quantity is obtained based on a plurality of measurements.

6. The method according to claim 4, wherein a measurement resource corresponding to the first measurement quantity is preconfigured or pre-agreed; and
the measurement resource corresponding to the first measurement quantity comprises at least one of the following:
a physical downlink control channel PDCCH demodulation reference signal DMRS;
a physical downlink shared channel PDSCH DMRS;
a channel state information reference signal CSI-RS;
a synchronization signal/physical broadcast channel signal block SSB;
a reference signal used for BFD;
a reference signal used for RRM;
a reference signal used for RLF;
an identifier corresponding to a reference signal used for BFD;
an identifier corresponding to a reference signal used for RRM; or
an identifier corresponding to a reference signal used for RLF.

7. The method according to claim 1, wherein the second preset condition comprises at least one of the following:
an SNR or a specific representation of an SNR conforms to a preconfigured range;
RSRP or a specific representation of RSRP conforms to a preconfigured range;
an SINR or a specific representation of an SINR conforms to a preconfigured range;
RSRQ or a specific representation of RSRQ conforms to a preconfigured range;
a packet delay or a specific representation of a packet delay conforms to a preconfigured range;
an RTT or a specific representation of an RTT conforms to a preconfigured range;
an OTDOA or a specific representation of an OTDOA conforms to a preconfigured range;
a measurement result corresponding to CSI or a specific representation of a measurement result corresponding to CSI conforms to a preconfigured first measurement range;
a measurement result of RRM measurement or a specific representation of a measurement result used for RRM measurement conforms to a preconfigured range;
a measurement result of BFD measurement or a specific representation of a measurement result used for BFD measurement conforms to a preconfigured range;
a measurement result of RLF or a specific representation of a measurement result used for RLF conforms to a preconfigured range;
a measurement result corresponding to an RS or a specific representation of a measurement result corresponding to an RS conforms to a preconfigured second measurement range; or
a measurement result corresponding to QoE measurement information or a specific representation of a measurement result corresponding to QoE measurement information conforms to a preconfigured third measurement range.

8. The method according to claim 4, wherein the radio resource management RRM measurement comprises:
serving cell measurement;
neighboring cell measurement;
camped cell measurement; and
non-camped cell measurement.

9. The method according to claim 1, wherein the first event comprises at least one of the following:
a beam failure recovery BFR event;
a radio link failure RLF event;
radio resource management RRM measurement;
a handover event;
a measurement result event corresponding to BFR;
a measurement result event corresponding to RLF; or
an event that triggers RRM measurement.

10. The method according to claim 1, wherein the third preset condition comprises at least one of the following:
a measurement result corresponding to a BFR event or a specific representation corresponding to a BFR event conforms to a preconfigured third measurement range;
a measurement result corresponding to an RLF event or a specific representation corresponding to an RLF event conforms to a preconfigured fourth measurement range;
a measurement result corresponding to RRM measurement or a specific representation corresponding to RRM measurement conforms to a preconfigured fifth measurement range; or
a measurement result corresponding to a handover event or a specific representation corresponding to a handover event conforms to a preconfigured sixth measurement range.

11. The method according to claim 10, wherein the measurement result corresponding to the BFR event or the specific representation corresponding to the BFR event comprises at least one of the following:
a measurement result that is in BFR and that is based on a beam failure detection reference signal;
a measurement result that is in BFR and that is based on a new beam; or
a measurement result that is based on an occurrence frequency of the BFR event.

12. The method according to claim 10, wherein the measurement result corresponding to the RLF event or the specific representation corresponding to the RLF event comprises at least one of the following:
a serving cell-based measurement result;
a neighboring cell-based measurement result; or
a measurement result that is based on an occurrence frequency of the RLF event.

13. The method according to claim 10, wherein the measurement result corresponding to the RRM measurement or the specific representation corresponding to the RRM event comprises at least one of the following:
a measurement result corresponding to a serving cell;
a measurement result corresponding to a neighboring cell;
a measurement result corresponding to a camped cell;
a measurement result corresponding to a non-camped cell; or
frequencies corresponding to various types of RRM measurement reporting events.

14. The method according to claim 10, wherein the measurement result corresponding to the handover event or the specific representation corresponding to the handover event comprises at least one of the following:
a TA corresponding to a source cell;
a TA corresponding to a target cell;
data interruption duration;
a result of a signal quality difference before and after handover;
a measurement statistical quantity obtained during a handover process; or
a handover frequency.

15. The method according to claim 1, wherein the first identifier comprises at least one of the following:
a cell identifier; or
a public land mobile network PLMN identifier.

16. The method according to claim 1, wherein the fourth preset condition comprises at least one of the following:
a cell identifier is an identifier in a preconfigured cell identifier list; or
a PLMN identifier is an identifier in a preconfigured PLMN identifier list.

17. The method according to claim 1, wherein the first transmission parameter comprises at least one of the following:
a channel feature parameter;
phase information between different transmitting antennas or between different transmitting ports;
a measurement parameter obtained on one or more beams;
information corresponding to different beam pairs, wherein the beam pair comprises a transmit beam and a receive beam;
a measurement parameter obtained on one or more frequencies;
data demodulation soft information;
a bit error rate or a block error rate of transmission of a data packet, wherein the data packet comprises one or more of the following: a physical layer data packet, a MAC layer data packet, an RLC layer data packet, a PDCP layer data packet, and an IP layer data packet; or
interference measurement information.

18. The method according to claim 1, wherein the fifth preset condition comprises at least one of the following:
a channel feature parameter or a specific representation of a channel feature parameter conforms to a preconfigured parameter range;
a beam measurement parameter or a representation channel feature parameter to a beam measurement parameter conforms to a preset configured parameter range;
phase information between different transmitting antennas or between different transmitting ports or a specific representation of the phase information conforms to preconfigured phase information;
information corresponding to different receive beams or a specific representation of information corresponding to different receive beams conforms to preconfigured first beam information;
information corresponding to different beam pairs or a specific representation of information corresponding to different beam pairs conforms to preconfigured second beam information;
a measurement parameter obtained on one or more frequencies conforms to a preconfigured parameter range;
data demodulation soft information or a specific representation of data demodulation soft information conforms to preconfigured information;
a bit error rate of transmission of a data packet or a specific representation of a bit error rate of transmission of a data packet conforms to preconfigured information, wherein the data packet comprises one or more of the following: a physical layer data packet, a MAC layer data packet, an RLC layer data packet, a PDCP layer data packet, and an IP layer data packet;
a block error rate or a specific representation of a block error rate conforms to a preconfigured information; or
interference measurement information or a specific representation of interference measurement information conforms to preconfigured information.

19. The method according to claim 1, wherein the first condition further comprises:
an information processing manner corresponding to the first condition conforms to a preconfigured manner.

20. The method according to claim 1, wherein the first configuration comprises one or more of the following:
specific second information configured for reporting; and
content for configuring the second information.

21. The method according to claim 1, before the performing, by a terminal, a first operation, further comprising:
obtaining a first neural network; and
determining, based on an output of the first neural network, whether the first condition is met.

22. The method according to claim 21, wherein the obtaining a first neural network comprises:
obtaining neural network information sent by a first preset node, wherein the neural network information indicates at least one neural network; and
determining, based on first indication information sent by a second preset node, the first neural network from the at least one neural network indicated by the neural network information.

23. The method according to claim 22, wherein the first preset node and a third preset node are different nodes, or the second preset node and a third preset node are different nodes, wherein
the third preset node is a node that sends the first condition to the terminal.

24. The method according to claim 23, wherein the first preset node or the second preset node or the third preset node comprises at least one of the following:
a base station;
a positioning management function node;
a network data analytics function node;
an operation and maintenance management node; or
a core network reserved node.

25. The method according to claim 21, wherein input information of the first neural network comprises at least one of the following:
information about the location in which the terminal is located;
information about the first measurement quantity;
information about the first event;
information about the first identifier;
information about the first transmission parameter;
the application layer configuration information; or
first configuration information.

26. The method according to claim 1, wherein the compressing the second information in a preset compression manner comprises:
compressing, by the terminal, the second information based on a second neural network; or
compressing, by the terminal, the second information based on a large-scale parameter; or
compressing, by the terminal, the second information by merging a plurality of parts of the second information; or
performing, by the terminal, mathematical operations on a plurality of parts of the second information to obtain a statistical feature, and reporting the statistical feature; or
compressing, by the terminal, the second information in a differencing manner; or
compressing, by the terminal, the second information based on a type of the second information; or
compressing, by the terminal, the second information based on a priority of the second information; or
compressing, by the terminal based on an association relationship between two pieces of second information, the second information.

27. The method according to claim 26, wherein the differencing manner comprises at least one of the following:
differencing by time;
differencing by location; or
differencing by target parameter, wherein the target parameter comprises at least one of a tracking area TA, a frequency, a public land mobile network, connection information, and a quality of service flow QoS Flow.

28. The method according to claim 26, wherein the compressing, by the terminal, the second information based on a type of the second information comprises:
obtaining a type corresponding to each piece of second information; and
selecting second information corresponding to a target type as the compressed second information.

29. The method according to claim 26, wherein the compressing, by the terminal, the second information based on a priority of the second information comprises:
obtaining a priority corresponding to each piece of second information; and
selecting second information with a priority higher than a preset priority as the compressed second information.

30. The method according to claim 26, wherein at least two of the following information types in the second information reported by the terminal are associated:
time information;
measurement result information;
location information;
event information; and
channel feature information.

31. The method according to claim 1, wherein different first target information corresponds to different first conditions or preset compression manners, and the first target information comprises at least one of the following:
a cell;
a TA area;
a frequency;
a PLMN;
connection information;
a QoS flow (Flow); or
a bandwidth part BWP.

32. The method according to claim 31, further comprising:
in a case that the first target information is replaced, replacing a corresponding first condition or preset compression manner.

33. The method according to claim 31, wherein each piece of first target information corresponds to at least one first condition or at least one preset compression manner.

34. The method according to 31, wherein configuration signaling of the first condition or the preset compression manner is the same as configuration signaling of the first target information.

35. The method according to claim 1, before the performing, by a terminal, a first operation in a case that a first condition is met, further comprising:
obtaining second indication information, wherein the second indication information indicates index information corresponding to at least one of the first condition and the preset compression manner; and
determining, based on the second indication information, at least one of a first condition and a preset compression manner corresponding to the second indication information.

36. The method according to claim 1, wherein a reporting granularity of the second information comprises at least one of the following:
each terminal;
each cell;
each frequency layer;
each BWP;
each transmitting antenna port; or
each receiving antenna port.

37. The method according to claim 1, wherein the second information comprises at least one of the following:
target information;
representation information of target information;
measurement information corresponding to target information;
neural network usage information corresponding to target information;
whether target information meets the first condition; or
value information corresponding to target information, wherein
the target information comprises at least one of the following:
information about the location in which the terminal is located;
information about the first measurement quantity;
information about the first event;
information about the first identifier;
information about the first transmission parameter;
the application layer configuration information; or
first configuration information.

38. The method according to claim 37, wherein the representation information of the target information is indicated by information corresponding to a neural network.

39. The method according to claim 1, wherein the reporting second information comprises:
reporting the compressed second information according to a predefined period; or
triggering reporting of the compressed second information based on a trigger condition, wherein
the trigger condition comprises at least one of the following:
reporting indication information sent by a network is received;
a predefined event occurs; or
a quantity of pieces of second information reaches a preset threshold.

40. An information processing apparatus, comprising:
a first processing module, configured to perform a first operation in a case that a first condition is met, wherein
the first condition comprises at least one of the following:
a location in which the terminal is located meets a first preset condition;
a first measurement quantity meets a second preset condition;
a first event meets a third preset condition;
a first identifier meets a fourth preset condition;
a first transmission parameter meets a fifth preset condition;
application layer configuration information meets a sixth preset condition; or
a first configuration meets a seventh preset condition; and
the first operation comprises one or more of the following:
collecting statistics to obtain first information;
generating a first report;
reporting second information; and
compressing the second information in a preset compression manner, and reporting compressed second information.

41. A terminal, comprising a processor, a memory, and a program or instructions stored in the memory and executable on the processor, wherein when the program or instructions are executed by the processor, steps of the information processing method according to any one of claims 1 to 39 are implemented.

42. A readable storage medium, wherein the readable storage medium stores a program or an instruction, and when the program or the instruction are executed by a processor, steps of the information processing method according to any one of claims 1 to 39 are implemented.
